# EUROPEAN PATENT SPECIFICATION

(11) **EP 3 316 340 B1**
(45) Date of publication and mention of the grant of the patent: **13.03.2019**
(21) Application number: 16195786.5
(22) Date of filing: 26.10.2016
(51) Int. Cl.: H01M 2/10, H01M 2/12, H01M 10/647, H01M 10/6557, H01M 10/6555, H01M 10/6565, H01M 10/613

(54) **BATTERY MODULE**
BATTERIEMODUL
MODULE DE BATTERIE

(43) Date of publication of application: 02.05.2018
(73) Proprietor: Samsung SDI Co., Ltd., Giheung-gu Yongin-si, Gyeonggi-do 17084 (KR)
(72) Inventor: Schmiedhofer, Christoph, 8020 Graz (AT); Rath, Helmut, 8481 St. Veit / Südsteiermark (AT)
(74) Representative: Gulde & Partner

(56) References cited:
- US-A1- 2006 115 720
- US-A1- 2012 064 386
- US-A1- 2012 208 064
- US-A1- 2012 308 868

## Description

### Field of the Invention

The present invention relates to a battery module having a cooling device and a vehicle comprising such battery module.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, a rechargeable battery includes an electrode assembly including a positive electrode, a negative electrode, and a separator interposed between the positive and negative electrodes, a case receiving the electrode assembly, and an electrode terminal electrically connected to the electrode assembly. The case may have a cylindrical or rectangular shape depending on the intended purpose and the actual use of the rechargeable battery. An electrolyte solution is injected into the case for charging and discharging of the rechargeable battery through an electrochemical reaction of the positive electrode, the negative electrode, and the electrolyte solution.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

In order to safely use these battery modules, heat generated from the rechargeable batteries should be efficiently emitted, discharged and/or dissipated. If there is insufficient heat emission/discharge/dissipation, a temperature deviation occurs between the respective battery cells, such that the battery module cannot generate the desired amount of power. In addition, when the internal temperature of the battery increases due to the heat generated from the rechargeable battery, abnormal reactions occurs therein and thus charging and discharging performance of the rechargeable battery deteriorates and the life-span of the rechargeable battery is shortened.

Thus, cooling devices for cooling the rechargeable battery modules by efficiently emitting/discharging/dissipating heat generated from the battery are well-known in the art. One of well-known cooling devices is a cooling plate interposed between neighboring battery cells. Cooling plates according to the prior art usually include a closed surface having a cooling passage for a coolant. In that structure, the cooling passage is formed normally on only one surface of the cooling plate or both surfaces of each battery cell are unevenly cooled, which may lead to a low efficiency of cooling.

It is thus an object of the present invention to overcome or reduce the drawback of the prior art and to provide a battery module having an improved cooling efficiency.

### Summary of Invention

The present invention relates to a battery module comprising: a plurality of secondary battery cells, a first cooling channel aligned to one side of the row and a second cooling channel aligned to the same side of the row; and a flow path plate installed between neighboring battery cells forming a cooling passage for a coolant from the first cooling channel towards the second cooling channel, the plate including a guiding structure configured to guide the coolant flow from an inlet of the plate, which communicates with the first cooling channel, to an outlet of the plate, which communicates with the second cooling channel. The guiding elements include a plurality of curved ribs and plurality of circular elements in the form of circular protrusions, which are connected via a netlike supporting structure having openings and connecting parts connecting the openings together.

The battery module according to the cooling plate of the present invention has advantages in terms of the cooling efficiency. The curved ribs and the circular elements turn the coolant flow and cause turbulent flows. The turbulent flows minimize the volume of air flow while providing the maximum linear velocity at the surface. Thus, the turbulent flows generated around the curved ribs and the circular elements can improve the cooling performance. Further, the plurality of curved ribs and the plurality of circular elements are connected via a netlike supporting structure having openings and connecting parts connecting the openings together. Then, the cooling passage for the coolant of the guiding elements may be evenly shared by both neighboring battery cells due to the openings between the curved ribs and the circular elements. It can evenly cool both of front and rear surfaces of each battery cell in the row, so that it can improve the cooling efficiency. In addition, the plurality of curved ribs and the plurality of circular elements may provide with a long cooling path, which can also improve the cooling efficiency. Further, the netlike structure may be less material consuming while providing a stable structure.

According to a preferred embodiment of the present invention, the guiding elements may further include a central pin extending from a portion of the plate between the inlet and outlet towards a center of the plate. The central pin may provide the netlike structure of the cooling plate with mechanical stability. The central pin may have a first length and the plate may extend from the inlet towards the opposite side of the plate with a second length and a ratio of the first length to the second length may be in the range of 1:2 to 1:3. In this range, the stability may be optimized.

Preferably, the central pin may have rounded tip and the circular elements may be installed closed to the inlet of the plate. These structures can enhance the turbulence of the flow of coolant and improve the efficiency of cooling.

According to a preferred embodiment of the present invention, the inlet and the outlet may be arranged at a length side of the plate. This may elongate the cooling path.

According to a preferred embodiment of the present invention, the battery module may include a housing and the first and second channels may be positioned at a bottom of the housing. This may improve the efficiency of cooling since also the bottom of the battery cells can be cooled by the coolant.

According to a preferred embodiment of the present invention, the battery cells and the plate may have a prismatic shape and the guiding elements may be arranged mirror-symmetrical with respect to an axis subdividing the plate into two parts of same dimension and extending from the side where the inlet and the outlet are positioned. Due to this symmetrical arrange of the guiding elements, the cooling length of one of the two parts of the plate is equal to that of the other of the two parts of the plate. It assures an even distribution of coolant over the surface of the plate and can improve the cooling efficiency.

Preferably, the battery module further comprises a frame encompassing the guiding elements. This may enhance the stability of the cooling plate.

According to a preferred embodiment of the present invention, a top of the plate may be sealed by sealing material. This may improve the thermal stability since the cooling plate can be sealed from a venting gas area provided at the battery cell or the battery module. Preferably, the sealing material is a non-conductive resin-based sealant or a steel plate.

According to a preferred embodiment of the present invention, the battery module may include a plurality of rows of secondary battery cells, which are aligned side by side in a column, and the plate may be installed between neighboring battery cells aligned in the row. This structure may reduce a volume of the battery module and simplify a manufacture thereof.

According to another aspect of the present invention, a vehicle including a battery module as defined above is provided.

Further aspects of the present invention could be learned from the dependent claims or the following description.

### Brief Description of the Drawings

Features will become apparent to those of ordinary skill in the art by describing in detail exemplary embodiments with reference to the attached drawings in which:
Fig. 1 illustrates an exemplary embodiment of a battery module;
Fig. 2 illustrates a schematic perspective view of a battery cell;
Fig. 3 illustrates a schematic of view of a battery module utilizing an active air-cooling approach according to an embodiment;
Fig. 4 illustrates a schematic perspective view of a housing supporting an active air-cooling approach according to an embodiment;
Fig. 5 illustrates a perspective view of a flow path plate according to an embodiment;
Fig. 6 illustrates a schematic perspective view of a flow path plate connected to a battery cell according to an embodiment; and
Fig. 7 illustrates a sectional view of a battery module having a flow path plate according to another embodiment.

### Detailed Description of the Invention

Reference will now be made in detail to embodiments, examples of which are illustrated in the accompanying drawings. Effects and features of the exemplary embodiments will be described with reference to the accompanying drawings. In the drawings, like reference numerals denote like elements, and redundant descriptions are omitted. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

In the following description of embodiments of the present invention, the terms of a singular form may include plural forms unless the context clearly indicates otherwise.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

It will be understood that when an element or layer is referred to as being "on," "connected to," or "coupled to" another element or layer, it can be directly on, connected to, or coupled to the other element or layer, or one or more intervening elements or layers may be present. In addition, it will also be understood that when an element or layer is referred to as being "between" two elements or layers, it can be the only element or layer between the two elements or layers, or one or more intervening elements or layers may also be present.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

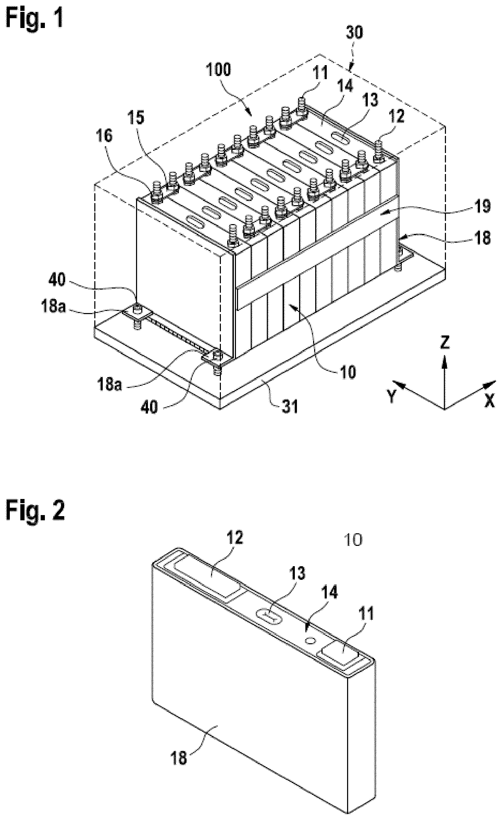

Fig. 1 illustrates an exemplary embodiment of a conventional battery module 100 including a plurality of secondary battery cells 10 aligned in a row. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a support plate 31 by bolts 40. The support plate 31 is part of a housing 30. The battery module 100 further includes a bus bar 15 electrically connecting positive and negative electrode terminals of neighboring battery cells 10 and the bus bar 15 may be fixed by a nut 16 or the like.

Referring to Fig. 2, each battery cell 10 is a prismatic (or rectangular) cell, the wide flat surfaces of the cells being stacked together to form the battery module. Further, each battery cell 10 includes a battery case 18 configured for accommodation of an electrode assembly and an electrolyte. The battery case 18 is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15 as shown in Fig. 1. Hence, the battery module 100 may be used as power source unit by electrically connecting the plurality of battery cells 10 as one bundle.

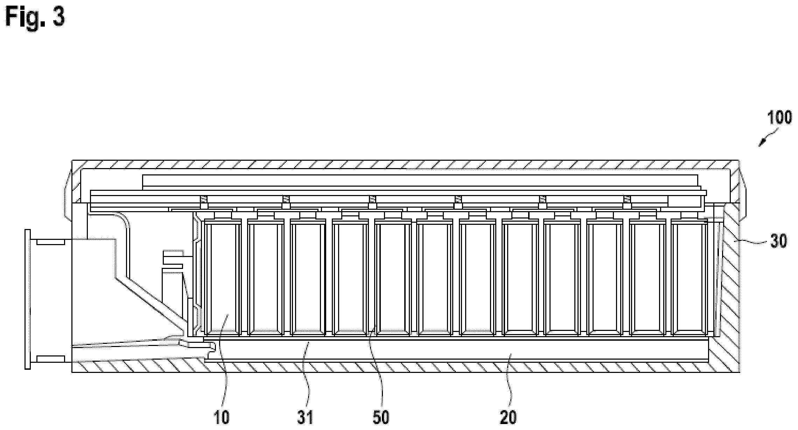

Fig. 3 illustrates a schematic perspective view of a battery module 100 according to an embodiment of the present invention. A plurality of aligned battery cells 10 are arranged in the row and flow path plates 50 are disposed between adjacent battery cells 10. The battery module 100 further includes a first cooling channel 20 and a second cooling channel 40, which are aligned to the same side of the row. As shown in Fig. 3, a coolant is introduced into an inlet of the first cooling channel 20 and flows towards an outlet of the second cooling channel 40. Specifically, the coolant flows from the first cooling plate 20 into the flow path plate 50 and from the flow path plate 50 into the second cooling channel 40. Thus, the flow path plate 50 forms a cooling passage for the coolant from the inlet of the first cooling channel 20 towards the outlet of the second cooling channel 40. Cooling of the battery cells 10 is accomplished by the coolant passing the plate 50 disposed between the battery cells 10. The coolant may be air, but is not limited thereto.

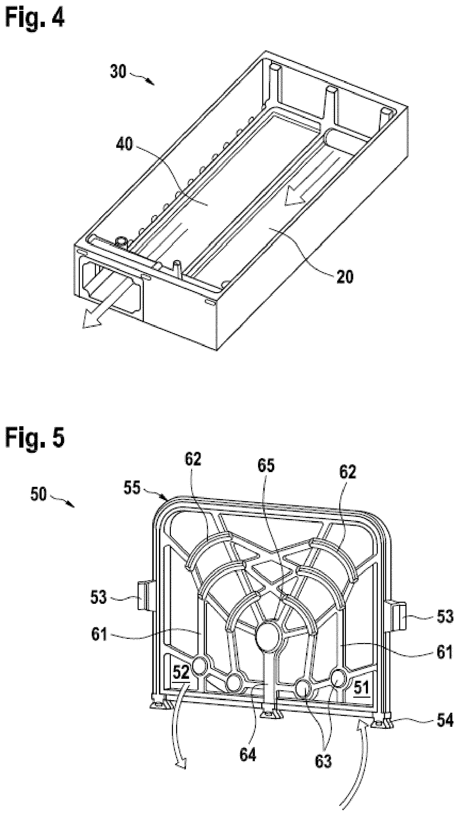

The battery module 100 may further include a housing 30 encompassing the battery module 100 and a support 31 as in the conventional battery module. As shown in Fig. 4, the first cooling channel 20 and the second cooling channel 40 may be positioned at a bottom of the housing 30. Then, the bottom of the battery cells can be cooled by the coolant too.

Fig. 5 is a perspective view of a flow path plate 50 according to an embodiment of the present invention. As shown in Fig. 5, the flow path plate 50 includes an inlet 51 and an outlet 52 for the coolant. The inlet 51 of the plate 50 communicates with the first cooling channel 20 through a gap between the battery cell 10 and the plate 50 and thus, the coolant provided from the first cooling channel 20 is introduced through the inlet 51 into the plate 50. As shown in Fig. 5, the coolant introduced into the inlet 51 of the plate 50 is guided by the guiding elements formed on the plate 50 and flows towards the outlet 52 of the plate 50. The outlet 52 of the plate 50 communicates with the second cooling channel 40 through a gap between the battery cell 10 and the plate 50 and thus, the coolant from the outlet 52 of the plate 50 flows towards the second cooling channel 40.

The flow path plate 50 of the present invention may further include a side protrusion 53 and a lower supporting part 54 to be connected to the battery cell 10. The side protrusion 53 may be hinge-connected to the battery cell 10 and the lower supporting part 54 may be welded on the support 31 of the housing 30. However, the present invention is not limited thereto.

The inlet 51 and the outlet 52 of the plate 50 may be positioned on a length side of the plate 50, which represents a preferred embodiment of the present invention. Here, the length side is a side having a length longer than two other sides. However, the present invention is not limited thereto. The inlet 51 and the outlet 52 of the plate 50 may be arranged at any positions enabling to communicate with the first and second cooling channels, respectively.

Referring to Fig. 5, the guiding elements of the flow path plate 50 of the present invention include a plurality of curved ribs 62 and a plurality of circular elements 63. The curved ribs 62 and the circular elements 63 turn the coolant flow and cause turbulent flows. As well-known, the turbulent flows improve the cooling performance. Thus, all kind of shapes of ribs enabling to turn the coolant flow may be applied to the flow path plate 50 of the present invention. Here, the circular elements 63 are circular protrusions. Here, the circular elements 63 may be installed closed to the inlet 51 and/or outlet 52 of the plate 50. It may also improve the cooling efficiency.

As further shown in Fig. 5, the plurality of curved ribs 62 and the plurality of circular elements 63 are connected via a netlike supporting structure 61 having openings and connecting parts connecting the openings together. Due to the openings of the netlike supporting structure 61, the coolant passage for the coolant can be shared by both neighboring battery cells 10 and can cool front and rear surfaces of each of the battery cells 10.

As shown in Fig. 5, the battery module 100 according to the present invention may include a frame 55 encompassing the guiding elements and the guiding elements may include a central pin 64. The frame 55 and the central pin 64 provide the netlike structure of the plate 50 with mechanical stability. Fig. 5 illustrates that the central pin 64 extends from the bottom of the plate 50 towards the center of the plate 50. Here, the center of the plate 50 may be a point at which the inlet 51 and outlet 52 meet. The central pin 64 preferably extends from the middle of the bottom of the plate 50 for improving mechanical stability and ensuring uniformly coolant flow on within the plate 50, but the present invention is not limited thereto. As long as the central pin 64 can stably support the plate 50, it may extend from another point of the bottom, i.e., a point between the inlet 51 and the outlet 52 of the plate 50. The length of the central pin 64 is determined also to improve the stability of the plate 50 as well as to ensure uniform coolant distribution. Preferably, the length of the central pin 64 is selected such that its length and the length of the plate 50 with which the plate 50 extends from the inlet 51 of the plate 50 towards the opposite side of the plate 50 are in range of 1:2 to 1.3. The central pin 64 may include a rounded tip 65 as shown in Fig. 5. The rounded tip 65 can also cause turbulent flows.

The guiding elements may be arranged mirror-symmetrical with respect to an axis subdividing the plate 50 into two parts of same dimension and extending from the side where the inlet 51 and the outlet 52 are positioned. Due to this symmetrical arrange of the guiding elements, the cooling length of one of the two parts of the plate 50 is equal to that of the other of the two parts of the plate 50. It assures an even distribution of coolant over the surface of the plate 50 and can improve the cooling efficiency.

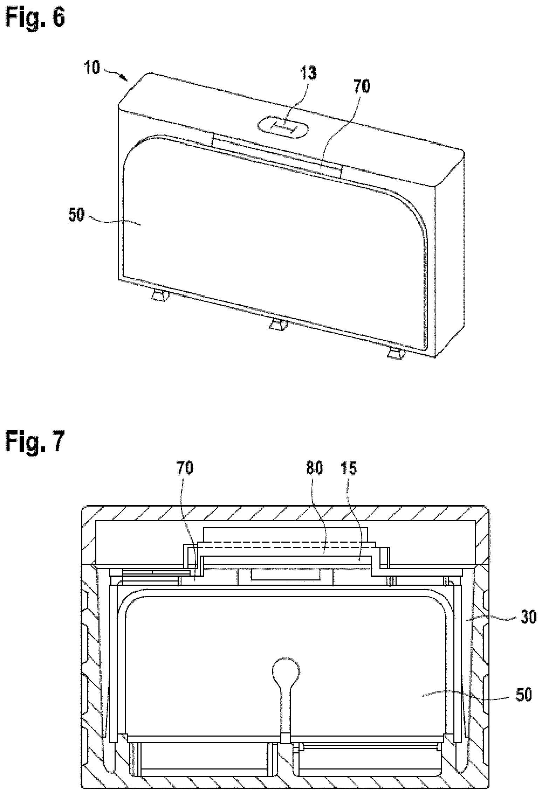

Fig. 6 schematically illustrates a perspective view of a flow path plate connected to a battery cell 10 according to an embodiment. As shown in Fig. 6, a top of the plate 50 may be sealed by sealing material 70. Here, the top may be a side of the plate 50 opposite to the side where the inlet 51 and outlet 52 of the plate 50 are positioned. As described above, the battery cell 10 includes the vent 13 as a safety means, which acts as a passage through which gas generated in the battery cell 10 is exhausted to the outside of the battery cell 10. The exhausted gas usually flows through a venting gas area and the venting gas area may be provided in the housing of the battery cell 10 and/or in a bus-bar 15 connecting the plurality of battery cells 10 together. According to the present invention, the flow path plate 50 can be sealed from the venting gas area by the sealing material 70, which may improve the thermal stability. The sealing material 70 may be a non-conducting resin based sealant or a steel plate, but the present invention is not limited thereto.

Fig. 7 illustrates a sectional view of a battery module 100 having a flow path plate 50 according to another embodiment. The plate 50 is installed between neighboring battery cells 10 aligned in the row as described above. Also in this embodiment, the top of the plate 50 may be sealed by a sealing material 70 and a vent gas area 80 may be provided at the bus bar 15 connecting two battery cells 10. In terms of high thermal stress the secondary battery cell 10 may rupture and a significant amount of flammable and hazardous gas may occur. In case of automotive application, it has to be assured that the gas is not entering the vehicle compartment. In order to achieve this goal, the cooling system provides a venting gas area above the battery cells, which is hermetically sealed from the cooling channels 20 and 40.

According to the present invention, a turbulent cooling passage having a long cooling length is evenly shared by both neighboring battery cells. Thus, a battery module having an improved cooling efficiency is provided. Further, due to the symmetrical arrangement of the cooling passage on the flow path plate, the coolant is evenly distributed on the plate.

## Claims

1. A battery module (100) including:
- a plurality of secondary battery cells (10) aligned in a row;
- a first cooling channel (20) aligned to one side of the row and a second cooling channel (40) aligned to the same side of the row; and
- a flow path plate (50) installed between neighboring battery cells (10) forming a cooling passage for a coolant from the first cooling channel (20) towards the second cooling channel (40), the plate (50) including guiding elements configured to guide the coolant flow from an inlet (51) of the plate (50), which communicates with the first cooling channel (20), to an outlet (52) of the plate (50), which communicates with the second cooling channel (40),
wherein the guiding elements include a plurality of curved ribs (62) and plurality of circular elements (63) in the form of circular protrusions, which are connected via a netlike supporting structure (61) having openings and connecting parts connecting the openings together.

2. The battery module of claim 1, wherein the guiding elements further include a central pin (64) extending from a portion of the plate (50) between the inlet (51) and outlet (52) of the plate (50) towards a center of the plate (50).

3. The battery module of claim 2, wherein the central pin (64) has a rounded tip (65).

4. The battery module of claim 2 or 3, wherein the central pin (64) has a first length and the plate (50) extends from the inlet (51) of the plate (50) towards the opposite side of the plate (50) with a second length and a ratio of the first length to the second length is in the range of 1:2 to 1:3.

5. The battery module of one of the preceding claims, wherein the circular elements (63) are installed close to the inlet and/or the outlet of the plate (50).

6. The battery module of one of the preceding claims, wherein the inlet (51) of the plate (50) and the outlet (52) of the plate (52) are arranged at a length side of the plate (50).

7. The battery module of one of the preceding claims, wherein the battery module (100) includes a housing (30) and the first and second channels (20, 40) are positioned at a bottom of the housing (30).

8. The battery module of one of the preceding claims, wherein the battery cells (10) and the plate (50) have a prismatic shape.

9. The battery module of claim 8, wherein the guiding elements are arranged mirror-symmetrical with respect to an axis subdividing the plate (50) into two parts of same dimension and extending from the side where the inlet (51) of the plate (50) and the outlet (52) of the plate (50) are positioned.

10. The battery module of one of the preceding claims, further comprising a frame (55) encompassing the plate (50).

11. The battery module of one of the preceding claims, wherein a top of the plate (50) is sealed by sealing material (70).

12. The battery module of claim 11, the sealing material (70) is a non-conducting resin based sealant or a steel plate.

13. The battery module of claim 11, further comprising a vent gas area (80) on the sealing material.

14. A vehicle including a battery module (100) according to one of the preceding claims.

## Patentansprüche

1. Ein Batteriemodul (100), aufweisend:
- eine Vielzahl von Sekundärbatteriezellen (10), die in einer Reihe ausgerichtet sind;
- einen ersten Kühlkanal (20), der zu einer Seite der Reihe ausgerichtet ist, und einen zweiten Kühlkanal (40), der zur selben Seite der Reihe ausgerichtet ist; und
- eine erste Durchflusswegplatte (50), die zwischen benachbarten Batteriezellen (10) angebracht ist und einen Kühldurchgang für ein Kühlmittel vom ersten Kühlkanal (20) zum zweiten Kühlkanal (40) ausbildet, wobei die Platte (50) Führungselemente, die konfiguriert sind, um den Kühlmittelfluss von einem Einlass (51) der Platte (50), der mit dem ersten Kühlkanal (20) kommuniziert, zu einem Auslass (52) der Platte (50), der mit dem zweiten Kühlkanal (40) kommuniziert, zu leiten, aufweist,
wobei die Führungselemente eine Vielzahl gekrümmter Rippen (62) und eine Vielzahl kreisförmiger Elemente (63) in Form kreisförmiger Vorsprünge aufweisen, die über eine netzartige Stützstruktur (61), die Öffnungen und Verbindungsteile, die die Öffnungen miteinander verbinden, aufweist, verbunden sind.

2. Das Batteriemodul nach Anspruch 1, wobei die Führungselemente ferner einen zentralen Stift (64), der sich von einem Abschnitt der Platte (50) zwischen dem Einlass (51) und dem Auslass (52) der Platte (50) zu einer Mitte der Platte (50) erstreckt, aufweisen.

3. Das Batteriemodul nach Anspruch 2, wobei der zentrale Stift (64) eine abgerundete Spitze (65) aufweist.

4. Das Batteriemodul nach Anspruch 2 oder 3, wobei der zentrale Stift (64) eine erste Länge aufweist und sich die Platte (50) vom Einlass (51) der Platte (50) zur gegenüberliegenden Seite der Platte (50) mit einer zweiten Länge erstreckt und ein Verhältnis der ersten Länge zur zweiten Länge im Bereich von 1:2 bis 1:3 liegt.

5. Das Batteriemodul nach einem der vorhergehenden Ansprüche, wobei die kreisförmigen Elemente (63) nahe am Einlass und/oder Auslass der Platte (50) angebracht sind.

6. Das Batteriemodul nach einem der vorhergehenden Ansprüche, wobei der Einlass (51) der Platte (50) und der Auslass (52) der Platte (52) auf einer Längsseite der Platte (50) angeordnet sind.

7. Das Batteriemodul nach einem der vorhergehenden Ansprüche, wobei das Batteriemodul (100) ein Gehäuse (30) aufweist und der erste und zweite Kanal (20, 40) auf einem Boden des Gehäuses (30) positioniert sind.

8. Das Batteriemodul nach einem der vorhergehenden Ansprüche, wobei die Batteriezellen (10) und die Platte (50) eine prismatische Form aufweisen.

9. Das Batteriemodul nach Anspruch 8, wobei die Führungselemente spiegelsymmetrisch bezüglich einer Achse angeordnet sind, die die Platte (50) in zwei Teile derselben Größe unterteilt und sich von der Seite, auf der der Einlass (51) der Platte (50) und der Auslass (52) der Platte (50) positioniert sind, erstreckt.

10. Das Batteriemodul nach einem der vorhergehenden Ansprüche, ferner aufweisend einen Rahmen (55), der die Platte (50) umgibt.

11. Das Batteriemodul nach einem der vorhergehenden Ansprüche, wobei eine Oberseite der Platte (50) von einem Dichtungsmaterial (70) abgedichtet wird.

12. Das Batteriemodul nach Anspruch 11, wobei das Dichtungsmaterial (70) ein nicht-leitendes Dichtungsmittel auf Harzbasis oder eine Stahlplatte ist.

13. Das Batteriemodul nach Anspruch 11, ferner aufweisend einen Abgasbereich (80) auf dem Dichtungsmaterial.

14. Ein Fahrzeug, aufweisend ein Batteriemodul (100) nach einem der vorhergehenden Ansprüche.

## Revendications

1. Module de batterie (100) comportant :
- une pluralité d'éléments de batterie secondaire (10) alignés sur une rangée ;
- un premier canal de refroidissement (20) aligné sur un côté de la rangée et un second canal de refroidissement (40) aligné sur le même côté de la rangée ; et
- une plaque de trajet d'écoulement (50) installée entre des éléments voisins de batterie (10) formant un passage de refroidissement destiné à un agent de refroidissement depuis le premier canal de refroidissement (20) vers le second canal de refroidissement (40), la plaque (50) comportant des éléments de guidage configurés pour guider l'écoulement d'agent de refroidissement depuis une entrée (51) de la plaque (50), qui communique avec le premier canal de refroidissement (20), vers une sortie (52) de la plaque (50), qui communique avec le second canal de refroidissement (40),
dans lequel les éléments de guidage comportent une pluralité de nervures courbes (62) et une pluralité d'éléments circulaires (63) sous la forme de protubérances circulaires qui sont reliées au moyen d'une structure réticulaire de support (61) présentant des ouvertures et des parties de liaison reliant les ouvertures entre elles.

2. Module de batterie selon la revendication 1, dans lequel les éléments de guidage comportent en outre une tige centrale (64) s'étendant depuis une partie de la plaque (50) entre l'entrée (51) et la sortie (52) de la plaque (50) vers un centre de la plaque (50).

3. Module de batterie selon la revendication 2, dans lequel la tige centrale (64) présente une extrémité arrondie (65).

4. Module de batterie selon la revendication 2 ou 3, dans lequel la tige centrale (64) présente une première longueur et la plaque (50) s'étend depuis l'entrée (51) de la plaque (50) vers le côté opposé de la plaque (50) sur une seconde longueur et un rapport de la première longueur à la seconde longueur se situe dans la plage de 1:2 à 1:3.

5. Module de batterie selon l'une des revendications précédentes, dans lequel les éléments circulaires (63) sont installés à proximité de l'entrée et/ou de la sortie de la plaque (50).

6. Module de batterie selon l'une des revendications précédentes, dans lequel l'entrée (51) de la plaque (50) et la sortie (52) de la plaque (52) sont disposées sur un côté longitudinal de la plaque (50).

7. Module de batterie selon l'une des revendications précédentes, dans lequel le module de batterie (100) comporte un boîtier (30) et les premier et second canaux (20, 40) sont positionnés au bas du boîtier (30).

8. Module de batterie selon l'une des revendications précédentes, dans lequel les éléments de batterie (10) et la plaque (50) ont une forme prismatique.

9. Module de batterie selon la revendication 8, dans lequel les éléments de guidage sont disposés en symétrie spéculaire par rapport à un axe subdivisant la plaque (50) en deux parties de même dimension et s'étendant depuis le côté où sont positionnées l'entrée (51) de la plaque (50) et la sortie (52) de la plaque (50).

10. Module de batterie selon l'une des revendications précédentes, comprenant en outre un cadre (55) entourant la plaque (50).

11. Module de batterie selon l'une des revendications précédentes, dans lequel un sommet de la plaque (50) est rendu étanche par un matériau d'étanchéité (70).

12. Module de batterie selon la revendication 11, le matériau d'étanchéité (70) est un produit d'étanchéité à base de résine non conductrice ou une plaque d'acier.

13. Module de batterie selon la revendication 11, comprenant en outre une zone de dégazage (80) sur le matériau d'étanchéité.

14. Véhicule comportant un module de batterie (100) selon l'une des revendications précédentes.
